# NEUE EUROPÄISCHE PATENTSCHRIFT

(11) **EP 2 722 261 B2**
(45) Veröffentlichungstag und Bekanntmachung des Hinweises auf die Entscheidung über den Einspruch: **03.08.2022**
(45) Hinweis auf die Patenterteilung: 15.04.2015
(21) Anmeldenummer: 13188245.8
(22) Anmeldetag: 11.10.2013
(51) Int. Cl.: B62D 59/04, B60L 15/20, B60L 7/12, B60L 50/52

(54) **Rangierantrieb mit Zusatzbremsmodul**
Manoeuvring drive with additional brake module
Entraînement de manoeuvre doté d'un module de freinage supplémentaire

(30) Priorität: 22.10.2012 DE 202012010074 U
(43) Veröffentlichungstag der Anmeldung: 23.04.2014
(73) Patentinhaber: Truma Gerätetechnik GmbH & Co. KG, 85640 Putzbrunn (DE)
(72) Erfinder: Aemisegger, Steve, 81547 München (DE); Fernandez, Ana María, 81739 München (DE); Gumpp, Daniel, 86415 Mering (DE); Möhring, Mario, 85408 Gammelsdorf (DE); Müller, Jochen, 85665 Moosach (DE); Müller, Jörg, 85658 Egmating (DE); Müssler, Klaus, 85235 Egenburg (DE); Schaurer, Oliver, 85445 Oberding (DE); Schmid, Tobias, 85435 Erding (DE); Thiel, Stefan, 83022 Rosenheim (DE); Venschott, Mathias, 81825 München (DE); Zawadski, Kamil, 85540 Haar (DE)
(74) Vertreter: Prinz & Partner mbB

(56) Entgegenhaltungen:
- EP-A1- 2 138 387
- DE-U1-202009 005 185
- DE-U1-202010 008 600
- GB-A- 2 450 863

## Beschreibung

Die Erfindung betrifft einen Rangierantrieb für einen Anhänger.

Bei diesem Anhänger kann es sich beispielsweise um einen Wohnwagen, einen Bootsanhänger, einen Pferdeanhänger, einen Marktanhänger oder Ähnliches handeln. Dieser wird üblicherweise von einer Zugmaschine gezogen. Für einen Wohnwagen dient meist ein Pkw als Zugmaschine. Um den Anhänger in seine endgültige Position zu bringen, beispielsweise auf einem Campingplatz, wird er üblicherweise von der Zugmaschine abgekoppelt und von Hand in die endgültige Position geschoben. Dies ist oft aber mit größeren Anstrengungen verbunden, da mit steigenden Anforderungen an den Komfort solcher Wohnwagen auch deren Gewicht steigt.

Um das Rangieren zu erleichtern, können Anhänger mit Rangierantrieben ausgestattet werden. Bei einem Rangierantrieb handelt es sich um einen Hilfsantrieb, der meist für jedes Rad des Anhängers eine Antriebseinheit mit einem Elektromotor aufweist. Die Elektromotoren werden von einer Batterie im Anhänger mit elektrischer Energie versorgt und können mit den Rädern des Anhängers gekoppelt werden, um diese anzutreiben und damit den Anhänger zu rangieren.

Jede Antriebseinheit ist mit einer mechanischen Bremse versehen, um zu gewährleisten, dass sich der Anhänger bei aktiviertem Rangierantrieb nicht unbeabsichtigt in Bewegung setzt, beispielsweise wenn er an einem Hang abgestellt ist. Die Bremse befindet sich im Ausgangszustand, insbesondere bei ausgeschaltetem Rangierantrieb, in einer geschlossenen Stellung. Um die Bremse zu lösen, muss sie aktiv geöffnet werden, beispielsweise durch Bestromen einer Spule, die über einen Hubanker ein Bremselement in eine geöffnete Stellung verstellen kann.

Aus der EP 2 138 387 A1 ist ein derartiger Rangierantrieb bekannt.

Die Aufgabe der Erfindung besteht darin, einen Rangierantrieb für einen Anhänger dahingehend weiterzubilden, dass sich eine noch höhere Betriebssicherheit ergibt.

Zur Lösung dieser Aufgabe ist erfindungsgemäß gemäß einem ersten Aspekt ein Rangierantrieb für einen Anhänger vorgesehen, mit einer Zentraleinheit und mindestens zwei Antriebseinheiten, die Rädern des Anhängers zugeordnet sind, wobei jede Antriebseinheit einen elektrischen Antriebsmotor aufweist, dem eine mechanische Bremse zugeordnet ist, wobei ein Zusatzbremsmodul vorgesehen ist, mit dem über die mechanische Bremse hinaus eine zusätzliche Bremswirkung der Antriebseinheiten erzeugt werden kann, und wobei das Zusatzbremsmodul die Drehzahl des Antriebsmotors aktiv auf 0 U/min zu regeln versucht, wobei die Zentraleinheit bzw. die entsprechende Antriebseinheit ein Aufwachmodul aufweist, das die Zentraleinheit bzw. die Antriebseinheit aktivieren kann, wenn es mit elektrischer Energie versorgt wird, wobei die im Generatorbetrieb der Antriebsmotoren erzeugte elektrische Energie dafür verwendet wird, die Zentraleinheit bzw. die Antriebseinheit zu versorgen, damit diese die Antriebsmotoren auf eine Drehzahl von 0 U/min regelt. Die Erfindung beruht auf dem Grundgedanken, zusätzlich zur mechanischen Bremse eine elektronische/elektrische Bremse zu verwirklichen. Eine solche Bremse kann mit vergleichsweise geringem Zusatzaufwand implementiert werden, da keine zusätzlichen mechanischen Bauteile notwendig sind. Beim Versuch des Zusatzbremsmoduls, die Drehzahl des Antriebsmotors aktiv auf 0 U/min zu regeln, handelt sich hierbei um die entgegengesetzte Vorgehensweise wie beim Antreiben der Räder des Anhängers; wenn die Zentraleinheit oder eine der Antriebseinheiten erkennt, dass die Antriebsmotoren der Antriebseinheiten sich drehen, obwohl die mechanische Bremse aktiviert ist, versucht das Zusatzbremsmodul, die Antriebsmotoren in einer der Drehung entgegengesetzten Richtung anzusteuern, so dass letztlich der Rotor des Antriebsmotors stehen bleibt. Die elektrische Energie, die dem Aufwachmodul bereitgestellt wird, kann insbesondere von den Antriebsmotoren stammen, die als Generator wirken, wenn sie von den Rädern des Anhängers angetrieben werden. Das Aufwachmodul ermöglicht es dann der Zentraleinheit oder den entsprechenden Motoreinheiten, verschiedene Gegenmaßnahmen gegen ein unbeabsichtigtes Wegrollen des Anhängers zu treffen. Beispielsweise kann ein Signalton erzeugt werden, oder es kann eine der Zentraleinheit zugeordnete Fernsteuerung aktiviert werden, an der ebenfalls eine Warnung erzeugt wird. Die im Generatorbetrieb der Antriebsmotoren erzeugt elektrische Energie wird dafür verwendet, die Zentraleinheit oder die entsprechende Antriebseinheit zu versorgen, damit diese die Antriebsmotoren auf eine Drehzahl von 0 U/min regelt. Bei dieser Ausführungsform wird also, wenn der Rangierantrieb (und damit die Zentraleinheit) abgeschaltet ist und der Anhänger sich in unbeabsichtigter Weise in Bewegung setzt, die von den Antriebsmotoren erzeugte elektrische Energie dafür verwendet, die Zentraleinheit oder die entsprechende Antriebseinheit selbsttätig "hochzufahren", damit diese durch aktives Regeln der Drehzahl der Antriebsmotoren auf 0 U/min dem Wegrollen des Anhängers entgegenwirkt. Dies führt dazu, dass die Energieversorgung der Zentraleinheit oder der Antriebseinheit wieder zusammenbricht, da die Antriebsmotoren keinerlei elektrische Energie mehr erzeugen, wenn der Anhänger steht. Sollte sich dann der Anhänger wieder in Bewegung setzen, wird die Zentraleinheit oder die entsprechende Antriebseinheit erneut hochgefahren, und der Bremsvorgang beginnt von Neuem. Insgesamt ergibt sich somit ein pulsierendes Bremsverhalten, mit dem das Wegrollen des Anhängers wesentlich verlangsamt werden kann, sodass der Bediener Gegenmaßnahmen ergreifen kann.

Zur Lösung dieser Aufgabe ist erfindungsgemäß gemäß einem zweiten Aspekt ein Rangierantrieb für einen Anhänger vorgesehen, mit einer Zentraleinheit und mindestens zwei Antriebseinheiten, die Rädern des Anhängers zugeordnet sind, wobei jede Antriebseinheit einen elektrischen Antriebsmotor aufweist, dem eine mechanische Bremse zugeordnet ist, wobei ein Zusatzbremsmodul vorgesehen ist, mit dem über die mechanische Bremse hinaus eine zusätzliche Bremswirkung der Antriebseinheiten erzeugt werden kann, wobei ein Kurzschlussschalter vorgesehen ist, mit dem die Antriebseinheit die Antriebswicklungen der Antriebsmotoren kurzschließen kann, wobei der Kurzschlussschalter die Antriebswicklungen des Antriebsmotors bei ausgeschalteter Zentraleinheit bzw. ausgeschalteter Antriebseinheit kurzschließt, wobei der Kurzschlussschalter in der Antriebseinheit angeordnet ist. Auf diese Weise kann eine zusätzliche Bremswirkung erzeugt werden, da ein kurzgeschlossener Antriebsmotor eine gewisse Bremswirkung bereitstellt, die jedoch mit abnehmender Drehzahl ebenfalls abnimmt. Der Kurzschlussschalter wirkt dabei ähnlich wie die mechanische Bremse automatisch dann, wenn der Rangierantrieb abgeschaltet ist. Allerdings setzt die Bremswirkung des Kurzschlussschalters erst dann ein, wenn sich der Anhänger in Bewegung gesetzt hat und sich die Rotoren der Antriebsmotoren drehen.

Die Erfindung wird nachfolgend anhand einer Ausführungsform beschrieben, die in den beigefügten Zeichnungen dargestellt ist. In diesen zeigen:
- Figur 1 in einer schematischen Seitenansicht einen Anhänger mit Rangierantrieb; und
- Figur 2 in einer schematischen Draufsicht den Anhänger von Figur 1.

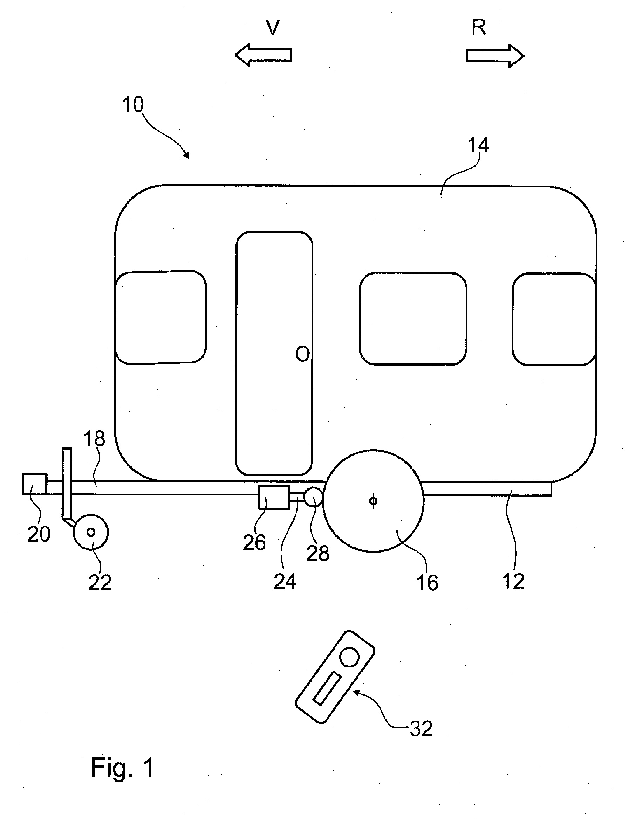

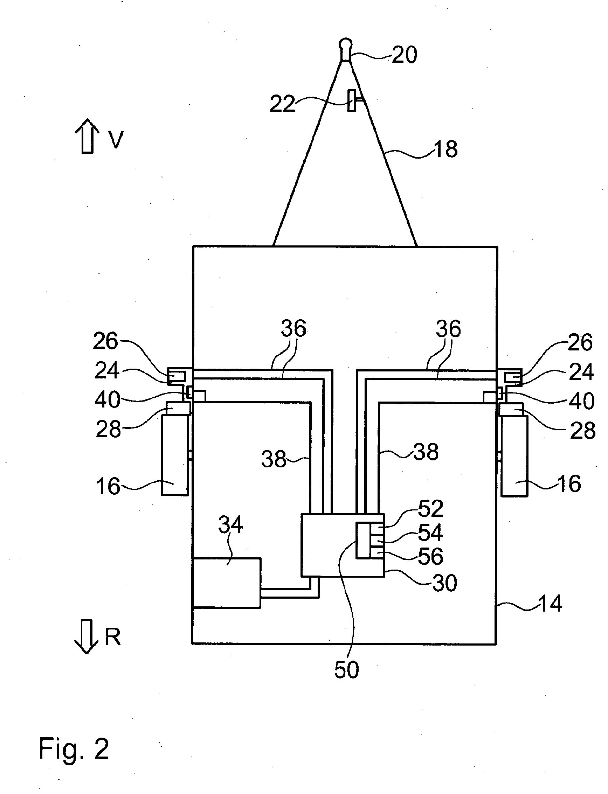

In den Figuren 1 und 2 ist schematisch ein Anhänger 10 (hier ein Wohnwagen) gezeigt, der einen Rahmen 12 aufweist, an dem ein Aufbau 14 angebracht ist. Weiterhin sind zwei Räder 16, eine Deichsel 18 und eine Kupplung 20 vorgesehen. Mit der Kupplung 20 kann der Anhänger 10 an eine Zugmaschine angekoppelt werden. An der Deichsel 18 ist ein Hilfsrad 22 angebracht, welches im abgekoppelten Zustand zum Abstützen des Anhängers 10 dient.

Jedem Rad 16 des Anhängers 10 ist eine Antriebseinheit 24 zugeordnet. Jede Antriebseinheit 24 weist einen Antriebsmotor 26 auf, der üblicherweise als Elektromotor ausgeführt ist, sowie eine Antriebsrolle 28, die vom Antriebsmotor 26 angetrieben werden kann. Die Antriebsrolle 28 kann mit dem zugeordneten Rad 16 des Anhängers 10 in Eingriff gebracht werden.

Weiterhin ist eine Zentraleinheit 30 vorgesehen, die als zentrale Steuerung für die Antriebseinheiten 24 dient und auch für die Kommunikation mit einem Bediener zuständig ist. Dieser kann beispielsweise über eine schematisch in Figur 1 gezeigte Fernbedienung 32 beispielsweise eine Geradeausfahrt oder eine Kurvenfahrt vorgeben.

Im Anhänger 10 ist außerdem eine Spannungsquelle 34 vorgesehen, mittels der die Zentraleinheit 30 und die Antriebseinheiten 24 mit elektrischer Energie versorgt werden können. Die Spannungsquelle kann ein Netzteil sein, das an eine externe Steckdose angeschlossen ist, oder ein Energiespeicher, der sich an Bord des Anhängers befindet. In diesem Fall handelt es sich beim Energiespeicher 34 üblicherweise um einen Akkumulator, umgangssprachlich oft auch als Batterie bezeichnet. Die Antriebsmotoren 26 sind dabei über Anschlussleitungen 36 mit der Zentraleinheit verbunden. Ferner ist für jede Antriebseinheit mindestens eine Steuerleitung 38 vorgesehen, die sich von der Zentraleinheit 30 zu jeder Antriebseinheit 24 erstreckt.

Die Antriebseinheiten 24 zusammen mit der Zentraleinheit 30 bilden einen Rangierantrieb, mit dem der Anhänger 10 verfahren werden kann. Zu diesem Zweck werden die Antriebsrollen 28 in Eingriff mit den Rädern 16 des Anhängers gebracht, sodass sie, wenn sich die Antriebsmotoren 26 drehen, die Räder 16 antreiben. Dies ist grundsätzlich aus dem Stand der Technik bekannt.

Als Ausführungsbeispiel ist hier ein einachsiger Anhänger gezeigt. Dementsprechend weist der Anhänger 10 zwei Räder 16 auf, denen jeweils eine Antriebseinheit 24 zugeordnet ist. Grundsätzlich kann derselbe Rangierantrieb auch bei einem zweiachsigen Anhänger eingesetzt werden. Dabei können weiterhin insgesamt lediglich zwei Antriebseinheiten verwendet werden, sodass auf jeder Seite des Anhängers ein angetriebenes und ein nicht angetriebenes Rad vorhanden ist, oder es können auf jeder Seite des Anhängers zwei Antriebseinheiten eingesetzt werden, sodass jedes Rad des Anhängers angetrieben werden kann.

Jede Antriebseinheit 24 ist mit einer mechanischen Bremse 40 versehen, die beispielsweise unmittelbar auf die Welle des Rotors des Antriebsmotors 26 wirken kann. Die mechanische Bremse ist so ausgeführt, dass sie automatisch einen geschlossenen Zustand einnimmt. Um sie zu lösen, muss sie aktiv angesteuert werden. Dies geschieht mittels der Zentraleinheit 30, welche die Bremsen 40 löst, bevor die Antriebsmotoren 26 angesteuert werden, und die Bremsen 40 wieder schließt, wenn die Antriebsmotoren 26 nicht mehr angesteuert werden.

Die Zentraleinheit 30 ist mit einem Zusatzbremsmodul 50 versehen, mit dem eine zusätzliche Bremswirkung der Antriebseinheiten 24 erzeugt werden kann.

Teil des Zusatzbremsmoduls 50 ist ein Kurzschlussschalter 52, der die Antriebswicklungen der Antriebsmotoren im nicht aktivierten Zustand automatisch kurzschließt. Wenn also bei ausgeschalteter Zentraleinheit 30 versucht wird, die Antriebsmotoren 26 zu drehen, beispielsweise weil der Anhänger 10 an einem Hang abgestellt wurde und die Hangabtriebskraft so groß ist, dass die Räder 16 über die Antriebsrollen 28 die Antriebsmotoren 26 antreiben können, erzeugen die Antriebsmotoren 26 durch Selbstinduktion eine Bremswirkung, die umso großer ist, je größer die Drehgeschwindigkeit der Antriebsmotoren 26 ist.

Das Zusatzbremsmodul 50 weist außerdem ein Aufwachmodul 54 auf, welches die Zentraleinheit 30 aus einem bedienerseitig abgeschalteten Zustand automatisch hochfährt, wenn erfasst wird, dass an den Anschlussleitungen 36 eine Spannung anliegt. Diese Spannung wird erzeugt, wenn die Antriebsmotoren 26 in einem Generatorbetrieb laufen, also von außen angetrieben werden, wie dies der Fall ist, wenn sich der Anhänger 10 unbeabsichtigt in Bewegung setzt. Das Aufwachmodul 54 sorgt in diesem Fall dafür, dass die Zentraleinheit 30 in einen zumindest so weit betriebsbereiten Zustand versetzt wird, dass ein Bremsmodul 56 aktiviert werden kann, dessen Aufgabe darin besteht, die Drehzahl der Antriebsmotoren 26 aktiv auf 0 U/min zu regeln. Die hierfür nötige Energie stammt aus dem Generatorbetrieb der Antriebsmotoren 26. Indem das Bremsmodul 56 versucht, die Drehzahl der Antriebsmotoren auf 0 U/min zu regeln, wird eine Bremswirkung erzeugt, die dem Rollen des Anhängers entgegenwirkt. Dadurch wird über die Bremswirkung der mechanischen Bremse 40 hinaus eine weitere Bremswirkung erzeugt.

Sobald das Bremsmodul 56 in seinen Bemühungen, die Drehzahl der Antriebsmotoren 26 auf 0 U/min zu regeln, erfolgreich war, bricht auch die Energieversorgung durch die elektrischen Antriebsmotoren 26 wieder zusammen. Dies führt dazu, dass sich die Zentraleinheit 30 wieder ausschaltet. Dadurch werden auch die Antriebswicklungen der Antriebsmotoren 26 wieder vom Kurzschlussschalter 52 kurzgeschlossen.

Falls in diesem Zustand die von außen auf den Anhänger 10 einwirkende Kraft weiterhin so groß ist, dass sie größer ist als die von den mechanischen Bremsen 40 erzeugte Haltekraft, setzt sich der Anhänger 10 wieder langsam in Bewegung. Zunächst wirkt dieser Bewegung (über die Bremswirkung der mechanischen Bremse 40 hinaus) das Bremsmoment der kurzgeschlossenen Antriebsmotoren 26 entgegen. Sobald die von den Antriebsmotoren 26 beim Rollen erzeugte elektrische Energie eine bestimmte Schwelle überschreitet, wird wieder das Aufwachmodul 54 ansprechen, sodass die Zentraleinheit 30 wieder aktiv wird. Im Ergebnis rollt der Anhänger 10 stark verlangsamt, wobei sich die Bewegung zusammensetzt aus einer Beschleunigungsphase, einer Verzögerungsphase und einer Stillstandsphase, und so weiter.

Durch die zusätzliche Bremswirkung, die auf elektrischem Wege von der Zentraleinheit 30 bereitgestellt wird, rollt der Anhänger 10 so langsam, dass ein Bediener die Möglichkeit zum Eingreifen hat.

Gemäß einer Weiterbildung der Erfindung kann in der Zentraleinheit 30 ein Energiespeicher beispielsweise in der Form eines Kondensators vorgesehen sein, der im Generatorbetrieb der Antriebsmotoren 26 aufgeladen wird. Auf diese Weise kann die Energieversorgung der elektrischen Antriebseinheit für eine gewisse Zeit aufrechterhalten werden, nachdem die Zentraleinheit 30 die Antriebsmotoren 26 aktiv auf eine Drehzahl von 0 geregelt hat und dadurch die Generatorwirkung der Antriebsmotoren zusammengebrochen ist.

Es kann auch vorgesehen sein, dass in das Aufwachmodul 54 eine Zusatzfunktion integriert ist, die ein Warnsignal erzeugt, beispielsweise einen Signalton. Auf diese Weise können ein Bediener des Anhängers oder auch sonstige Personen, die sich in der Nähe befinden, darauf aufmerksam gemacht werden, dass ein kritischer Zustand vorliegt. Es ist auch möglich, die Fernbedienung 32 zu aktivieren und dort ein Warnsignal zu erzeugen, beispielsweise einen Signalton oder einen Vibrationsalarm.

Gemäß einer nicht dargestellten Alternative kann jede der Antriebseinheiten 24 mit einem Zusatzbremsmodul 50 versehen sein. In diesem Fall erkennt jede der Antriebseinheiten 24 autark, wenn sie mit Strom versorgt wird, der nicht von der Zentraleinheit 30 stammt, sondern von ihrem Antriebsmotor. Die dann eingeleiteten Gegenmaßnahmen entsprechen den oben erläuterten, von der Zentraleinheit ausgelösten Gegenmaßnahmen.

Ein Unterschied der alternativen Ausgestaltung mit jeweils einem Zusatzbremsmodul je Antriebseinheit besteht darin, dass die Zentraleinheit 30 den Kurzschlussschalter 52 jeder Antriebseinheit ansteuern und öffnen muss, wenn die Antriebsmotoren 26 aktiviert werden.

## Patentansprüche

1. Rangierantrieb (24, 30) für einen Anhänger (10), mit einer Zentraleinheit (30) und mindestens zwei Antriebseinheiten (24), die Rädern (16) des Anhängers (10) zugeordnet sind, wobei jede Antriebseinheit (24) einen elektrischen Antriebsmotor (26) aufweist, dem eine mechanische Bremse (40) zugeordnet ist, wobei ein Zusatzbremsmodul (50) vorgesehen ist, mit dem über die mechanische Bremse (40) hinaus eine zusätzliche Bremswirkung der Antriebseinheiten (24) erzeugt werden kann, und wobei das Zusatzbremsmodul (50) die Drehzahl des Antriebsmotors aktiv auf 0 U/min zu regeln versucht, wobei die Zentraleinheit (30) bzw. die entsprechende Antriebseinheit (24) ein Aufwachmodul (54) aufweist, das die Zentraleinheit (30) bzw. die Antriebseinheit (24) aktivieren kann, wenn es mit elektrischer Energie versorgt wird, wobei die im Generatorbetrieb der Antriebsmotoren (26) erzeugte elektrische Energie dafür verwendet wird, die Zentraleinheit (30) bzw. die Antriebseinheit (24) zu versorgen, damit diese die Antriebsmotoren auf eine Drehzahl von 0 U/min regelt.

2. Rangierantrieb (24, 30) für einen Anhänger (10), mit einer Zentraleinheit (30) und mindestens zwei Antriebseinheiten (24), die Rädern (16) des Anhängers (10) zugeordnet sind, wobei jede Antriebseinheit (24) einen elektrischen Antriebsmotor (26) aufweist, dem eine mechanische Bremse (40) zugeordnet ist, wobei ein Zusatzbremsmodul (50) vorgesehen ist, mit dem über die mechanische Bremse (40) hinaus eine zusätzliche Bremswirkung der Antriebseinheiten (24) erzeugt werden kann, und wobei ein Kurzschlussschalter (52) vorgesehen ist, mit dem die Antriebswicklungen der Antriebsmotoren (26) kurzgeschlossen werden können, und wobei der Kurzschlussschalter (52) die Antriebswicklungen des Antriebsmotors (26) bei ausgeschalteter Zentraleinheit (30) bzw. ausgeschalteter Antriebseinheit (24) kurzschließt, wobei der Kurzschlussschalter in der Antriebseinheit (24) angeordnet ist.

3. Rangierantrieb nach einem der vorhergehenden Ansprüche, **dadurch gekennzeichnet, dass** das Zusatzbremsmodul (50) in der Antriebseinheit (24) angeordnet ist.

## Claims

1. A maneuvering drive (24, 30) for a trailer (10), comprising a central unit (30) and at least two drive units (24) which are associated with wheels (16) of the trailer (10), each drive unit (24) including an electric drive motor (26) with which a mechanical brake (40) is associated, wherein an additional brake module (50) is provided which allows an additional braking effect of the drive units (24) to be generated in addition to the mechanical brake (40), and wherein the additional brake module (50) seeks to actively control the speed of the drive motor to 0 rpm, wherein the central unit (30) or the corresponding drive unit (24) includes a wake-up module (54) which is adapted to activate the central unit (30) or the drive unit (24) when it is supplied with electrical energy, wherein the electrical energy generated in generator mode of the drive motors (26) is made use of for supplying the central unit (30) or the drive unit (24), for the latter to control the drive motors to a speed of 0 rpm.

2. A maneuvering drive (24, 30) for a trailer (10), comprising a central unit (30) and at least two drive units (24) which are associated with wheels (16) of the trailer (10), each drive unit (24) including an electric drive motor (26) with which a mechanical brake (40) is associated, wherein an additional brake module (50) is provided which allows an additional braking effect of the drive units (24) to be generated in addition to the mechanical brake (40), and wherein a short-circuit switch (52) is provided by which the drive windings of the drive motors (26) can be short-circuited, and wherein the short-circuit switch (52) short-circuits the drive windings of the drive motor (26) with the central unit (30) switched off or with the drive unit (24) switched off, wherein the short-circuit switch is arranged in the drive unit (24).

3. The maneuvering drive according to either of the preceding claims, **characterized in that** the additional brake module (50) is arranged in the drive unit (24).

## Revendications

1. Entraînement de manœuvre (24, 30) pour remorque (10), comportant une unité centrale (30) et au moins deux unités d'entraînement (24) associées aux roues (16) de la remorque (10), chaque unité d'entraînement (24) présentant un moteur d'entraînement électrique (26) auquel un frein mécanique (40) est associé, un module de freinage additionnel (50) étant prévu au moyen duquel il est possible de produire un effet de freinage additionnel des unités d'entraînement (24) au-delà du frein mécanique (40), et le module de freinage additionnel (50) tentant de régler activement la vitesse de rotation du moteur d'entraînement à 0 tr/min, l'unité centrale (30) ou l'unité d'entraînement (24) correspondante présentant un module de réveil (54) apte à activer l'unité centrale (30) ou l'unité d'entraînement (24) lorsqu'il est alimenté en énergie électrique, l'énergie électrique produite dans le mode générateur des moteurs d'entraînement (26) étant utilisée pour alimenter l'unité centrale (30) ou l'unité d'entraînement (24) afin que celle-ci règle les moteurs d'entraînement à une vitesse de rotation de 0 tr/min.

2. Entraînement de manoeuvre (24, 30) pour remorque (10), comportant une unité centrale (30) et au moins deux unités d'entraînement (24) associées aux roues (16) de la remorque (10), chaque unité d'entraînement (24) présentant un moteur d'entraînement électrique (26) auquel un frein mécanique (40) est associé, un module de freinage additionnel (50) étant prévu au moyen duquel il est possible de produire un effet de freinage additionnel des unités d'entraînement (24) au-delà du frein mécanique (40), et un interrupteur de court-circuit (52) étant prévu au moyen duquel les enroulements d'entraînement des moteurs d'entraînement (26) peuvent être court-circuités, et l'interrupteur de court-circuit (52) mettant les enroulements d'entraînement du moteur d'entraînement (26) en court-circuit lorsque l'unité centrale (30) ou l'unité d'entraînement (24) est déconnectée, l'interrupteur de court-circuit étant agencé dans l'unité d'entraînement (24).

3. Entraînement de manœuvre selon l'une des revendications précédentes, **caractérisé en ce que** le module de freinage additionnel (50) est agencé dans l'unité d'entraînement (24).
